Europäisches Patentamt

European Patent Office

Office européen des brevets

(19)

(11) **EP 1 626 319 A1**

(12) **EUROPEAN PATENT APPLICATION**
published in accordance with Art. 158(3) EPC

(43) Date of publication:
**15.02.2006 Bulletin 2006/07**

(21) Application number: **04729122.4**

(22) Date of filing: **23.04.2004**

(51) Int Cl.:
**G05D 1/10** (1968.09)   **B64G 1/28** (1980.01)
**B63H 25/42** (1968.09)

(86) International application number:
**PCT/ES2004/000174**

(87) International publication number:
**WO 2004/104717** (02.12.2004 Gazette 2004/49)

(84) Designated Contracting States:
**AT BE BG CH CY CZ DE DK EE ES FI FR GB GR HU IE IT LI LU MC NL PL PT RO SE SI SK TR**

(30) Priority: **21.05.2003 ES 200301184**

(71) Applicant: **Advanced Dynamics, S.A.**
**28006 Madrid (ES)**

(72) Inventor: **BARCEL RICO-AVELL , Gabriel**
**E-28006 Madrid (ES)**

(74) Representative: **Irache Pereira Tona, Maria**
**c/Joaquin Costa, 51 2 A**
**28002 Madrid (ES)**

(54) **DYNAMIC SYSTEM FOR CONTROLLING MOBILE APPARATUSES**

(57)   The invention relates to a dynamic system for controlling any type of mobile apparatus that is moving in any type of liquid or gas fluid or in space, whereby said mobile apparatus has an aerodynamic profile and can move in a stable manner. According to the invention, for control purposes the apparatus is equipped with a built-in dynamic device with angular momentum along a main axis of the inertia ellipsoid thereof, which is used in the generation of a spatial variation in said angular momentum in order to modify and control the trajectory of the mobile apparatus as desired.

LEGEND OF THE FIGURES:

In several figures the abbreviation "c.d.g." appears, which should be changed to c.g.

FIG.10a

**FIG.10b**

**FIG.10c**

## Description

## Object of the Invention

The present invention relates to a dynamic system for controlling any type of mobile apparatuses, providing essential novelty features and notable advantages with respect to the means known and used for the same purposes in the current state of the art.

More specifically, the invention proposes the development of a dynamic system allowing the control of mobile apparatuses, modifying their trajectory both in the terrestrial atmosphere and in space, and also being susceptible to use in other fluid mediums, and especially in water.

The field of application of the invention is comprised within the area of activity dedicated to the control of mobile devices following a given trajectory, for the modification and/or maintenance thereof.

## Background of the Invention

The theory of dynamics allows conceiving a "dynamic lever" with technological applications and practical effects. This dynamic lever will allow designing mechanisms in which the result of its action would be obtained with reduced energy consumption, and with the possibility of recovering a high percentage of the supplied energy.

According to the theory of dynamic interactions in the case of bodies provided with intrinsic angular momentum, dynamic interactions occur which may modify the effect of any new momentum acting on the body. Thus in the case of a mobile apparatus with angular momentum, if any action acts on this apparatus generating a new angular momentum that does not coincide in the direction with the existing angular momentum, a dynamic interaction will be obtained as a reaction which could be used due to its dynamic lever effect.

The magnitude of the impinging action will also determine the magnitude of the dynamic interaction torque generated and the result will be a dynamic interaction allowing multiplying the effect of the forces applied without energy dissipation since dynamic coupling occurs between the linear momentum of the mobile apparatus and the increase of the angular momentum generated, always under given circumstances.

## Summary of the Invention

The present invention originates from the assumption that the mobile apparatus to be controlled is in space or in a gravitational field, such as the terrestrial gravitational field, the potential of which will be used to control said apparatus. In addition to terrestrial gravity, the system proposed by the invention allows being able to use forces resulting from natural physical field potentials without consuming conventional external energy, as well as others such as, for example, mechanical, magnetic and electromagnetic actuation forces, or forces of another nature, consuming conventional energies.

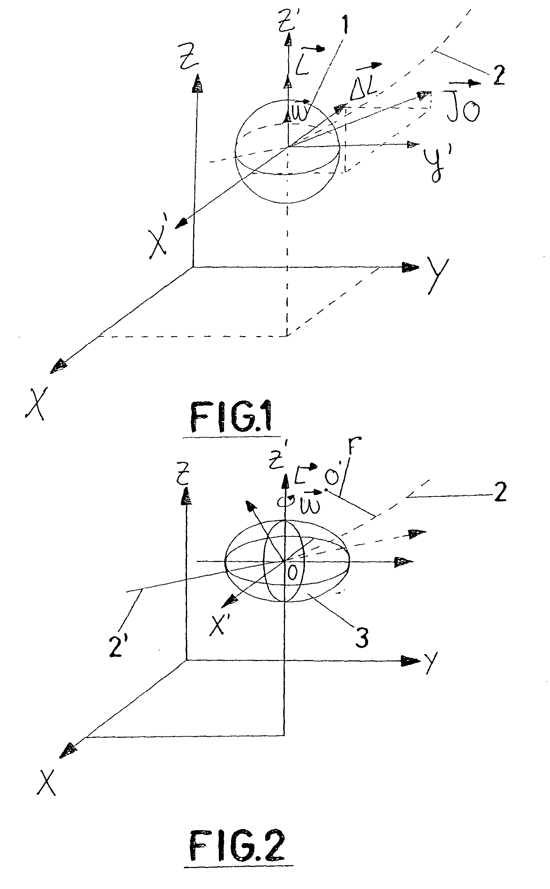

Figure 1 of the attached drawings shows an assumed case in which a sphere 1 in space X,Y,Z, provided with a translation velocity $\vec{V}_0$ in its trajectory 2 with an angular momentum $\vec{L}$ and a rotation ω about a principal axis of inertia Z', X',Y',Z' being the reference axes of the moving apparatus. Any variation of angular momentum $\Delta\vec{L}$ having a component perpendicular to the existing $\vec{L}$ will generate a dynamic interaction torque that will modify the moving apparatus trajectory.

The resultant behavior in the Earth's gravitational field will allow conceiving a mobile apparatus in space with intrinsic rotation, the actuation and control of which can be carried out with very little energy based on the dynamic interactions generated, determining straight or curved trajectories simply by the relative modification of its principal moment of inertia. This modification of the orientation of the moment of inertia could be carried out by means of the application of actions generating the rotation of the principal axis in relation with new axes, these actions being able to consist of forces outside or inside the solid, being able to be actuated by virtue of the action and reaction principle from the rotating solid.

The applicant of the present invention has no knowledge of the existence in the current state of the art of any system or device integrating the constructive and functional features that will be described throughout the present document.

## Brief Description of the Drawings

These and other features and advantages of the invention will become more clear from the following detailed description of a preferred embodiment, given only as an illustrative and non-limiting example, in reference to the attached drawings, in which:

Previously mentioned Figure 1 shows the theoretical case of a solid body, configured by way of a sphere, moving along a given trajectory, and which can be acted on in order to modify its trajectory;

Figure 2 shows a schematic illustration of the actuation of an active dynamic device with rotational movement about its principal axis, applicable to the case of an aircraft for example;

Figure 3A shows a schematic representation of the position of the center of gravity of the moving apparatus in space;

Figure 3B shows an also schematic representation of the moving apparatus when displacement of its center of gravity occurs;

Figure 4 schematically shows a cylindrical moving apparatus, with spin and subjected to variation of its angular momentum $\vec{L}$;

Figure 5 shows a schematic representation corresponding to a composition of velocities in the mobile apparatus of Figure 4;

Figure 6 shows a schematic graphic representation of the variation of position of the center of gravity according to the coupling between linear velocity and rotational velocity of the moving apparatus of the previous Figures 4 and 5;

Figure 7 schematically shows an embodiment in which the control system is materialized by means of a dynamic gravity rudder;

Figure 8 schematically shows the application of the system to the case of an aircraft with an internal rotor;

Figures 9A and 9B show schematic representations of an application of the system of the invention to the case of a craft propelled by turbine engines located at the stern thereof;

Figures 10A, 10B and 10C show schematic representations of a commercial airplane to which the dynamic rudder of the invention has been applied in replacement of the conventional tail rudder;

Figures 11A to 11E show schematic representations of a particular application of the system of the invention to the case of a torpedo provided with a dynamic rudder;

Figure 12 schematically shows the application of the system of the invention to a helicopter controlled by a dynamic rudder;

Figure 13 shows a schematic representation of the application of the system of the invention to the case of an artificial satellite as a dynamic turbine rudder;

Figure 14 graphically shows the same dynamic turbine rudder of Figure 13, provided in this case with an internal rotor, and

Figures 15A to 15C finally schematically show the case of application of the invention to a shuttle for its control by a dynamic lever.

**Description of the Invention**

In the present invention the control of an aircraft assumed to have an aerodynamic profile with stable displacement and lift in the fluid medium through which it moves would be carried out by means of a dynamic device with rotation according to a principal axis Z' of its inertia ellipsoid 3, as shown in Figure 2. Therefore the moving apparatus or aircraft must have kinetic momentum, consisting of an angular momentum $\vec{L}$, which in a first case can be obtained by means of a rotation constant $\widehat{\omega}$ of the craft about its principal axis of revolution, which must coincide with a principal axis of its inertia ellipsoid, and a linear momentum $m\vec{V}_0$ according to its trajectory 2. In this case, when forces of momentum $\vec{M}$ act allowing generating a variation of angular momentum $\Delta\vec{L}$, having a component perpendicular to the existing $\vec{L}$, the trajectory 2 of the center of gravity of the mobile apparatus will begin a curvature of radius "r" determined by the expression:

$$r = \frac{\vec{V}_0 \vec{L}}{\vec{M}'}$$

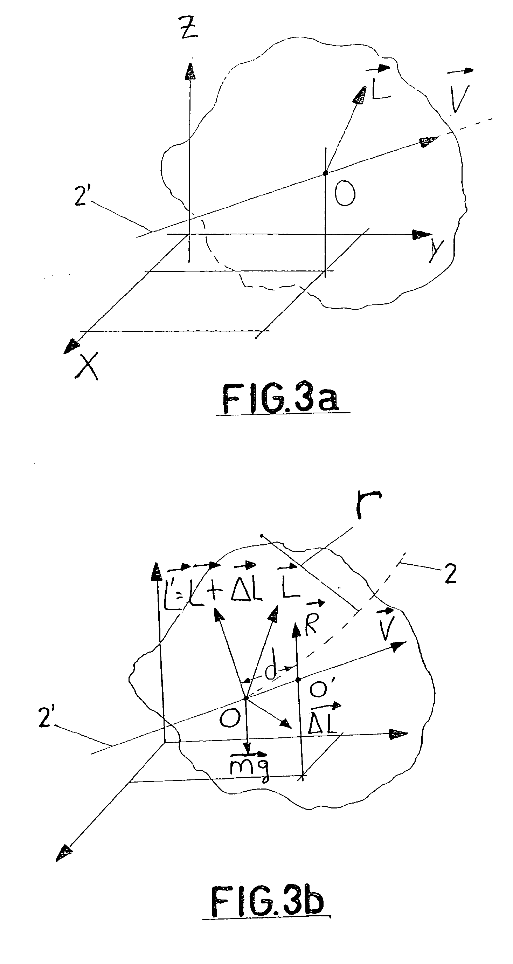

This variation of the trajectory 2 will be maintained while the action continues to act and will stop when said action stops. This action will be provided, for example, while the mobile apparatus remains in a gravitational field, by means of a system for the relative variation of its center of gravity, allowing generating new kinetic momenta perpendicular to the principal axis of rotation. Figure 3A schematically shows the center of gravity of the mobile apparatus in space, indicated in the Figure by means of "O". The dynamic situation of the mobile apparatus is also schematically shown in Figure 3B when a displacement "d" of the center of gravity "O" to a position "O'" occurs, thus generating an increase in the angular momentum $\Delta\vec{L}$ not coinciding in the direction with the existing $\vec{L}$, which will modify the trajectory of the center of gravity by coupling of the velocity $\vec{V}_0$ on the trajectory, with the precession rate generated by the dynamic interaction Ψ, this magnitude being determined by the equation:

$$\Psi = \frac{mgd}{I\widehat{\omega}}$$

where:

I = Moment of inertia of the mobile apparatus

$\widehat{\omega}$ = Angular velocity
Ψ = Angular precession rate
m = Mass of the mobile apparatus
d = Displacement of the center of gravity

$\widehat{g}$ = Acceleration of gravity

Control of the aircraft is performed by modifying the situation relating to its center of gravity by an amount "d", while maintaining gyroscopic rigidity and maintaining the craft rotating about its principal axis of inertia. Therefore, the aircraft would be in constant rotation and would have a conventional propulsion system.

Control of the aircraft would be only by means of acting on a device allowing the relative variation of the center of gravity "O" of the aircraft, while holding its center of lift "O" steady. With the aircraft balanced and the center of thrust coinciding with the center of gravity (see Figure 3A), the dynamic control system will allow linear displacement along a straight trajectory 2', whereas if the control device is actuated, the aircraft will perform a turn with a radius "r" proportional to the impulse received and about an outer axis perpendicular to that of the torque generated by the variation of the center of gravity of the aircraft (see Figure 3B).

Control of the aircraft is performed only by means of this device, referred to hereinafter as the dynamic gravity rudder, which will be connected to the craft control station, like with conventional control systems.

This type of aircraft control will allow a lower consumption of energy in its control and displacement, and will especially overcome gravitational fields with a lower consumption of energy since a dynamic interaction acts that will allow the aircraft to make use of dynamic leverage.

Furthermore the use of dynamic leverage due to the kinetic momentum of the craft will allow an additional energy savings, since the rotational inertia will be used to overcome gravitational or attraction fields that must be overcome a series of times.

### Description of a Preferred Embodiment

A necessary condition for the control system is for the aircraft to have a symmetrical fuselage and for it to correspond to a figure of revolution, with a principal axis of inertia, which will be the axis of rotation of the aircraft, or an internal rotor providing angular momentum to the system.

The turn is performed when generating a new kinetic momentum $\vec{L}$' which, if it has a component perpendicular to the initial momentum $\vec{L}$, will allow aircraft trajectory modification (see Figure 3B), for example by modifying the relative position of the center of gravity "O" of the aircraft and keeping the center of lift "O"' steady, or by any other possible procedure, where:

$$\vec{L}' = \vec{L} + \Delta L$$

Aircraft trajectory control is performed by achieving a spatial variation of the existing kinetic momentum, the variation of the relative position of the center of gravity of the aircraft being a specific application. The order of magnitude of the deviation from the trajectory 2 will be proportional to the moment of inertia of the aircraft, to its rotational velocity about its principal axis, and to the acceleration resulting from the relative modification of the position of its center of gravity "O".

Since the moment of inertia of the craft is a fixed value characteristic of it, trajectory 2 control can be performed by obtaining a spatial variation of its kinetic momentum, simultaneously changing the magnitude of that kinetic momentum or changing the direction of the rotation about its principal axis of inertia or by making the magnitude of the impinging forces change.

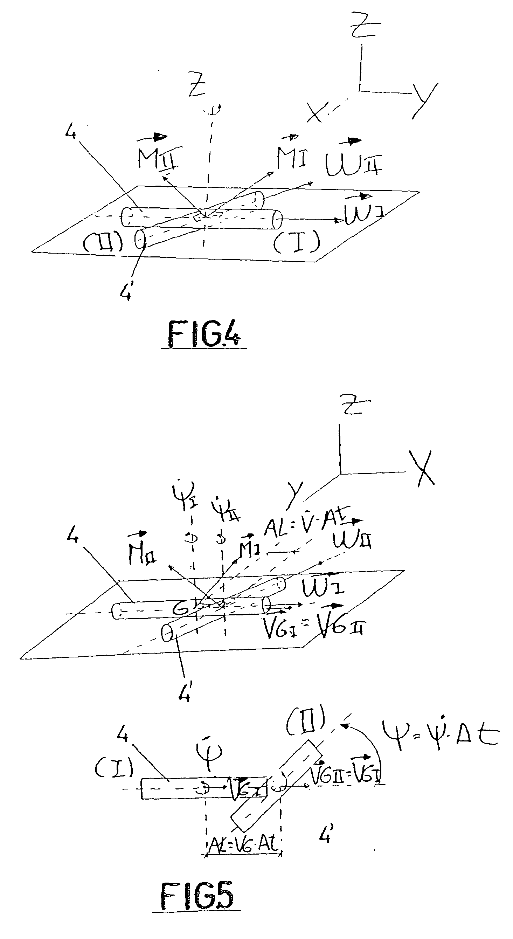

Figure 4 shows a mobile apparatus or cylindrical object 4 schematically representing an example of the aircraft control system object of this description, said mobile apparatus 4 being provided with initial rotation about its principal axis $\widehat{\omega}_I$, which is subjected to an external action, such as, for example, a group of forces of momentum $\vec{M}_{II}$ perpendicular to the spin axis.

Under these conditions, movement of the body will not be conditioned by lashings or other constraints, and is represented in the successive positions 4 and 4'. In any case, the trajectory of the body, represented by its center of gravity, will correspond to the equations of dynamics. However, under these conditions the object will precess about an axis passing through the center of gravity "O" and which will be perpendicular to the momentum $\vec{M}_{II}$.

In the event that there is no initial linear velocity of the body, it will be found that the body simultaneously maintains two rotations about two different axes, with no vector addition thereof. Induced precession Ψ is limited in this case to a new rotation about the Z axis. This is the case of Figure 4.

The addition of a velocity $\vec{V}_G$ to the aircraft under study subjected to a variation of its angular momentum $\Delta\vec{L}$ with a component perpendicular to the spin axis, will allow the composition of this initial velocity $\vec{V}_G$ with the precession Ψ generated by the acting momentum $\vec{M}_{II}$, the trajectory of its center of gravity "O" being modified.

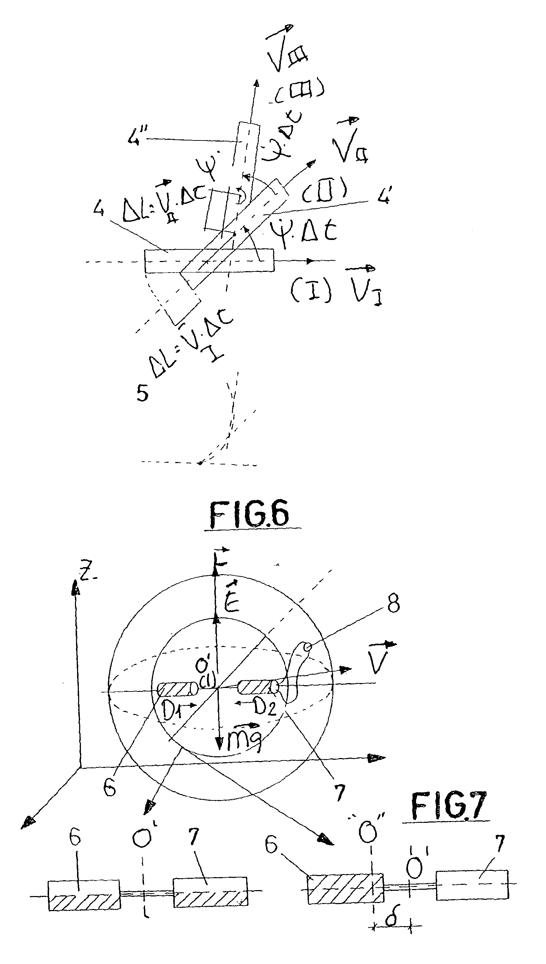

This coupling of velocities occurs due to the effect of the dynamic interaction torque generated, such that between two successive moments 4 and 4' (Figure 5), the mobile apparatus rotates about a vertical axis, perpendicular to the second momentum, an angle $\Psi$, while at the same time it moves with velocity $\vec{V}_G$ .

In this case coupling of the initial velocity $\vec{V}_G$ occurs and the resultant velocity of the centripetal precession $\Psi$ acceleration. The final result is precession movement simultaneously with the initial rotation $\widehat{\omega}_I$ about the longitudinal axis.

The kinematics will be the combination of precession 4, the nutation assumed null, as shown in the previous Figure, plus that due to the velocity the body has initially. Figure 6 clarifies these concepts.

In fact, in said Figure 6 there are three successive instants 4, 4', 4" of the aircraft trajectory such that the coupling between the precession rate $\Psi$ generated by the effect of the dynamic interaction and the velocity $\vec{V}_G$ applied on its center of gravity will determine the final trajectory indicated with 5 in Figure 6. This trajectory 5 will be a curved type. For the general case of rotation: precession, spin and nutation, the trajectory will be a three-dimensional type (the nutation will wobble the spin axis). If nutation is negligible, the trajectory will be contained in a plane containing the acting momentum and the velocity $\vec{V}_G$ .

Aircraft trajectory 5 will depend both on the existing angular momentum $\vec{L}$ and the velocity $\vec{V}_G$ it has, and on the acting torques $\vec{M}_I$ . In the case of constantly acting external forces, and if variations in the rotational phenomenon, increases or decreases of the external momentum, action on the angular velocity or on the modulus of the velocity, do not occur, the trajectory 5 will be circular. In other hypotheses, the trajectory will change, being able to determine any type of trajectory in aircraft control.

The dynamic actions applied on the body are those that determine the observed kinetics. These can be divided into two parts, mainly, those due to rotation and those due to translation, understood to be an action on velocity.

For dynamic analysis and in the event of being in the atmosphere, the existence of a drag force proportional to the forward movement of the body will be assumed. In rotation, this force will be opposed on one hand to the precession of the body, and on the other hand it will tend to decrease the spin velocity and nutation, should this exist, also opposing the translation of the body, i.e. there will be a resistive force according to the direction of the velocity vector. Therefore in the case of the rotation of the body, the only dynamic actions applied are, in the case of abandonment of the body with an initial spin, the external momentum and the actions on precession, nutation and spin, in any of the cases these actions are reduced to momenta which will tend to vary the angular velocity of the solid, and the position of this solid with respect to its center of gravity.

Conventional impulse of the aircraft propulsion system will steer it at all times in the desired direction, therefore the resistive force and hence the propelling force will have this direction. Since both forces pass through its center of gravity given the symmetry of the body, they will not produce momenta with respect thereto, and therefore the resultant momentum of the rotational phenomenon will not vary. In the event that these forces are not balanced, it would be necessary to apply certain angular acceleration to the aircraft.

Everything expressed above is applicable should the impulse received by the aircraft from its conventional propulsion system be variable. The trajectory of the body depends both on the rotation to which the body is subjected, and the linear velocity $\vec{V}$ it has, and on the acting momentum. In case of these variables remaining constant, and for an angular precession rate $\Psi$, the trajectory will be a circumference with radius:

$$r = \frac{V}{\Psi}$$

The resulting curved trajectory 5 of the body is obtained in the case of the aircraft being in a gravitational field without the action of an external force on the direction of the precession centripetal acceleration. In this case, the only applied forces are the weight acting on the center of gravity of the aircraft, the buoyant force that will act on the metacenter and the propelling force, and the latter acts in the velocity vector direction and its only effect would be to change the vector modulus but not its direction.

Final kinematics and dynamics will therefore be the combination of the rotational and "translational" phenomenon of the body. Therefore both of them define the final trajectory of the center of gravity and, hence, the aircraft trajectory, acting on the rotation whether through some of the components of the angular velocity of the solid through the applied external momentum, or acting on the linear velocity thereof.

The invention provides that other craft kinetic momentum modification systems can be applied, which can consist, for example, of auxiliary motors, turbine engines, nozzles, ..., etc. Several embodiment alternatives are explained below.

Figure 7 schematically represents an embodiment in which the dynamic gravity rudder is connected to the craft control station. This system is made up of a system of relative variation of the center of gravity "O" in relation to the center of lift of the aircraft, which must be provided with kinetic momentum, made up of the linear momentum resulting from the linear displacement velocity and angular momentum, for example due to a rotation over time on a principal axis of its inertia ellipsoid or due to the inner rotor having a sufficient moment of inertia. Propulsion and other aircraft features will be of the conventional type.

In particular, as shown in Figure 7, the system of relative variation of the center of gravity "O" in relation with the center of lift "O'" of the craft is made up of a network of fuel deposits and pumps 6, 7 distributed in the fuselage such that the fuel is transferred from some deposits 6 to other deposits 7 by means of pumping, generating displacement δ. This center of gravity displacement will modify the kinetic momentum of the craft due to the action of the acting forces, as can be seen in Figure 3B. The invention has provided for the inclusion of an electronic steering system 8 converting the trajectory control commands given from the control station into a transfer of fuel from some deposits to others.

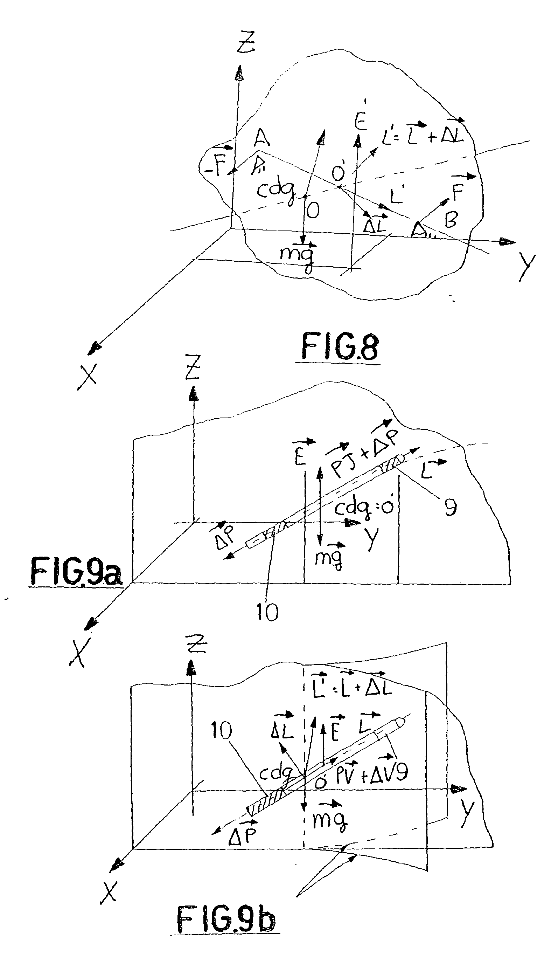

In an embodiment alternative the fuselage does not rotate about its principal axis, obtaining the dynamic interactions and dynamic leverage since it has, within the craft, a rotor with constant angular momentum coinciding with a principal axis of the inertia ellipsoid of the craft. This perfectly dynamically balanced rotor having sufficient angular momentum $\vec{L}$ is operated with conventional mechanisms, preferably by means of a turbine or electric engine. In this case the momentum outside the rotor is produced by virtue of the new rotation generated in the outer fuselage because the center of gravity and the center of lift of the craft do not coincide (see Figure 8). The generated dynamic interaction torque will transmit its dynamic leverage through points A and B. The displacement of the center of gravity "O" could be obtained by means of other systems provided in the foregoing.

The rotor is supported by means of suspension fixed to the craft structure, points A and B, allowing modification of the axis of rotation in relation to several reference axes, but such that it transmits its dynamic ratios to the craft fuselage.

According to the invention it has also been provided that the dynamic effects of the constantly rotating inrier rotor operate control nozzles located on the outer fuselage, which with their ignition generate new angular momenta that do not coincide with existing angular momentum for controlling the craft. To that end it will have an electronic dynamic reaction detection system which will give temporary ignition commands to the control nozzles.

In a specific embodiment aircraft propulsion and control is carried out with propeller turbine engines for the case of their use in the terrestrial atmosphere or in other similar ones.

Also according to the invention the aircraft can have a cylindrical fuselage, having an aerodynamic profile at the bow, propelled by turbine engines located at the stern, with the shape of a rocket. The aircraft will maintain constant rotational movement about its longitudinal axis while it moves, as shown in Figure 9A.

Aircraft control is carried out by displacement of its center of gravity by means of the use of a fuel-containing pump and deposit equipment located at the bow and stern, as shown in Figure 9B of the drawings.

The turn is carried out when fuel is transferred from a bow deposit 9 to a stern deposit 10, or vice versa. It must be indicated that by moving the center of gravity to the bow, the aircraft turns starboard, and by transferring the center of gravity to the stern it will turn portside. The same maneuver can be performed to raise or lower the craft by means of side deposits.

The turning radius of the turn will be proportional to the momentum generated by the weight located at the center of gravity and metacenter, the supply of external energy not being necessary with the exception of the fuel transfer since the weight and buoyant force will act according to the dynamic lever created by interaction.

During zero-turn navigation, the center of gravity will coincide with the metacenter, therefore angular steering momenta different from that currently existing are not generated and stability will be irrelevant (Figure 9A). In this Figure, the force resultant will be positioned in the geometric center of the object "O'", which in theory coincides with its center of gravity. As liquid is transferred from one deposit to another, eccentricity is created immediately between the application point of the force resultant $\vec{E}$ (see Figure 9B) and the weight of the body $m\vec{g}$ applied at its center of gravity. This disequilibrium induces a momentum in addition to the existing angular momentum which will generate a variation $\Delta\vec{L}$ in the initial $\vec{L}$. As a result of this new condition the body experiences precession which, when coupled with the velocity of the mobile apparatus $\vec{V} + \Delta\vec{V}$, define a linear trajectory change thereof (see Figure 9B), the trajectory becoming a curved trajectory the definition of which will be determined by both the moment of inertia and the prior velocities of the solid, and by the magnitude of the acting momentum.

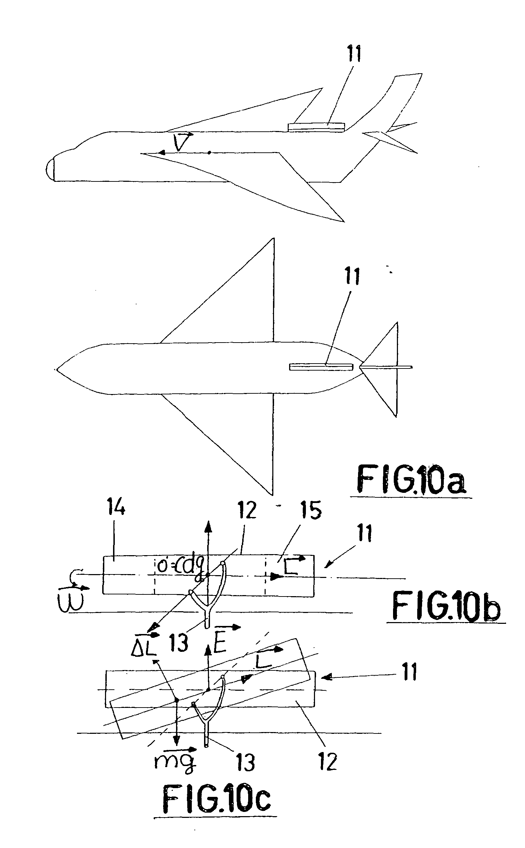

In the case of supplying the control system of the invention to a conventional airplane, the traditional tail rudder of an airplane is replaced by a device 11, as shown in Figure 10, which will be called the dynamic airplane rudder.

Airplane control, which is provided with a velocity $\vec{V}$ by means of a conventional propulsion system (Figure 10A), is performed by means of a cylinder 12 connected to the fuselage by means of a yoke 13 and located above the latter, centered with its axis parallel to the longitudinal axis from bow to stern (Figure 10B). This cylinder 12 is constantly revolving at velocity $\hat{\omega}$, having angular momentum $\vec{L}$, and internally has two empty front and rear deposits 14, 15 which will be filled up to 50% capacity with fuel, oil or another oil derivative liquid. The cylinder 12 will have a pump driving the fluid from one deposit to the other, as can be seen in Figures 10A and 10B, generating a disequilibrium that will create a variation of angular momentum $\Delta\vec{L}$.

The cylinder 12 is joined to the aircraft fuselage by means of the yoke 13, having a fixed connection located at its center, but which will allow oscillating the cylinder about its horizontal axis perpendicular to the longitudinal axis of the craft and parallel to the supporting plane, as well as rotating about its principal axis.

To control the airplane, the fluid deposited in the cylinder of a deposit 14 or 15 will be transferred to the other one 15 or 14. If both of them are equilibrated, "O'" coinciding with the center of gravity (c. g.), the dynamic rudder will allow linear displacement, such that in the event of pumping a larger amount to the front deposit, the aircraft will turn starboard and will turn portside in the opposite case, when a variation of angular momentum $\Delta\vec{L}$ is generated (see Figure 10C).

Horizontal aircraft control is performed only by means of this device which could be connected to pilot and copilot wheels, as in conventional control systems.

This type of craft control will not consume energy due to lateral displacement since the rudder blade in the turn, and in general, will reduce energy consumption since friction losses originating from the lateral displacement of the blade in the turn are reduced.

As an embodiment alternative, the dynamic device or dynamic airplane rudder is located inside the fuselage.

According to the system of the invention the dynamic or dynamic airplane rudder can also modify its angular momentum due to the action of magnetic, electromagnetic, or mechanical forces, or by means of any other type acting on the rotor.

It must be noted that craft control is obtained also due to the modification of the rotational direction of the rotor simultaneously with that of its center of gravity.

The invention is applicable to other types of mobile apparatuses, for example to the case of a submarine designed for marine research and other underwater experiments, controlled by a steering system by means of dynamic interactions.

The submarine will have a dynamic body at the bow where the crew's cabin or room will be housed, this body having flaps or stabilizing planes. The stern body will have the drive engine and other equipment, and will be cylindrical with a propeller at the stern.

The submarine will preferably act by means of an electric engine which will simultaneously rotate the bow body about its longitudinal axis and will operate the propeller responsible for the longitudinal movement of the craft. Submarine control will thus be performed by means of displacement of the center of gravity in relation to the center of buoyancy, modifying the resultant torque between the center of gravity and the metacenter.

The center of gravity relative position modification device can be carried out by means of the transfer of water from certain deposits to others, or by means of any of the devices described throughout this document. To control depth, the submarine may have side nozzles located on the outer fixed part of the submarine.

As an embodiment alternative, the submarine can have an inner rotor such that control will be obtained by displacement of the center of gravity or by modifying the rotor rotation direction simultaneously with its center of gravity.

Another embodiment of the invention consists of the application of the system to the case of a maritime combat torpedo, which does not have a rudder for control thereof, but this function is performed by means of control of the center of gravity of the projectile.

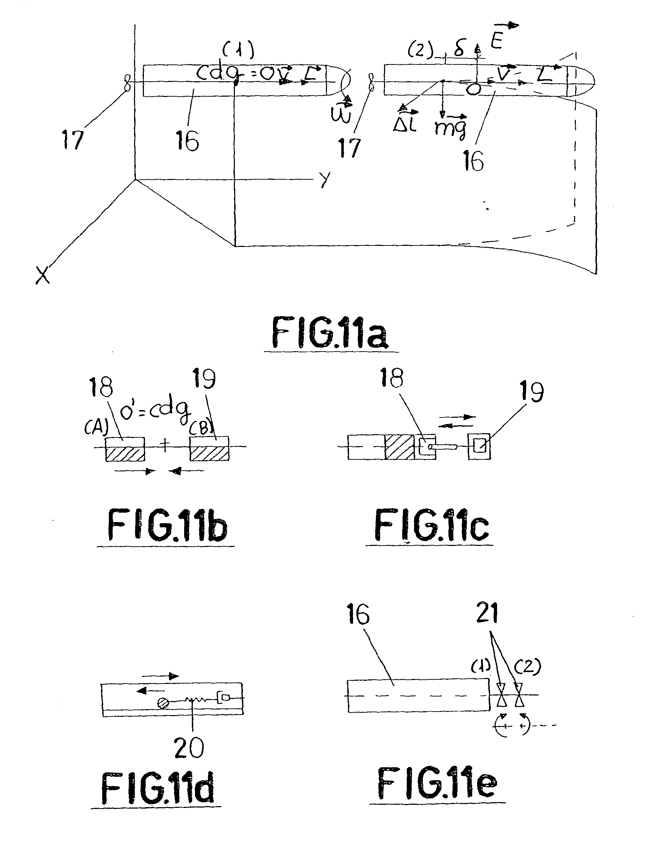

The torpedo 16 of Figure 11 will have an electric engine and propeller 17. The action of the engine simultaneously generates a translation velocity $\vec{V}$ and rotation of the torpedo about its longitudinal axis, providing angular momentum $\vec{L}$. Projectile control will be performed by modifying the position "O" of the center of gravity, c.g., in relation to the center of buoyancy "O'", by means of the transfer of water from one deposit 18 to another deposit 19, both located longitudinally, or with any of the systems described in the foregoing.

This displacement generates a momentum consisting of weight $m\vec{g}$ and force $\vec{E}$ with an arm $\delta$. Side nozzles located on the outer fixed part of the torpedo will be arranged for depth control.

According to the foregoing, modification of the position of the center of gravity in relation to the center of buoyancy is performed by means of the transfer of a gas or fluid from one deposit to another, both longitudinally aligned (see Figure 11B).

As an embodiment alternative, displacement of the center of gravity "O" of the torpedo is performed by means of a piston 18 actuated by a servomotor 19, as shown in Figure 11C.

Also as an embodiment alternative of the invention in its application to a torpedo, the displacement of the center of gravity of the torpedo 16 can be performed by means of any system for displacing moving weight 20 (see Figure 11D).

Finally as an additional embodiment, torpedo control can be performed by modifying its rotation direction simultaneously with its center of gravity, for example by means of a pusher propeller in both rotation directions, or by means of a double propeller 21 (see Figure 11E).

The system is also applicable to the case of an airship for transporting liquids or gases.

The airship will preferably have a cylindrical structure with a bow and stern with hydrodynamic profile and propelled by a propeller located at its stern that will simultaneously generate a rotational movement of the aircraft about its longitudinal axis. It will not have a rudder except for an emergency rudder, and its horizontal control is performed by translation of the center of gravity of the airship by means of the use of equipment consisting of pumps and two deposits containing water located at the bow and stern. Turning is performed when any fluid is transferred from one deposit to the other.

By moving the center of gravity to the bow, the airship will turn starboard and will turn portside in the opposite case. The turning radius of the turn will be proportional to the weight momentum, located at the center of gravity and the metacenter, the supply of external energy not being necessary since the weight and buoyant force act according to the dynamic lever created by interaction, consuming only the energy required for transferring water.

During zero-turn navigation the center of gravity will coincide with the metacenter, therefore there will be no righting or banking couple, and stability will be irrelevant. In the case of turns, the righting moment generated by the internal transfer will not disrupt airship stability, nor will it modify its elevation position.

The airship will be watertight and is made up of a symmetrical cylinder on a longitudinal axis. It will have blind ports in the suitable areas for the loading and unloading openings, or for maintenance operations. The airship will thus have a reduced possibility of spills or losses, in addition to a reinforced structure that will minimize the risks of transported product losses in accidents or events, allowing greater environmental suitability with respect to other conventional transport.

The airship will have a fixed body located at the stern for the crew. The dimensions of the airship will be adjusted to the register or gauge required to transport the liquid or gas, in all cases having a similar profile and structure.

Propulsion will be conventional, by means of a propeller driven by an electric, liquid or gas combustion engine, according to the type of product transported. Consumption will be less than conventional consumption, with no energy consumption by the rudder blade.

This transport system could also be used to transport water or water vapor to areas requiring it. Side propellers at both the bow and stern will be provided for elevation control.

As an embodiment variant, control of the airship is performed by means of the transfer of the same liquid or fuel being transported, without needing to have additional deposits or pumps to control the airship.

As an additional embodiment the airship can be controlled by remote control, with no crew, in this case not requiring the assembly of said fixed body. In this case there could even be an expected navigation director program for its automatic performance, supervised by a remote control center. In an alternative applied to a rocket or projectile, elevation modification is obtained by means of two jet turbines located on the fixed part of the fuselage, at the tail, and will be actuated by remote control intermittently and in response to the control commands received.

The horizontal course could be controlled by means of the relative displacement of the center of gravity with respect to the center of lift by any of the devices that have been defined in the previous applications and in attached claims 12, 13 and 14.

Furthermore, elevation modification could be obtained by means of a single jet turbine located on the fixed part of the fuselage, at the tail, and will be actuated by remote control intermittently and in response to the loss of elevation.

Elevation modification can optionally be obtained by means of a single jet turbine located on the fixed part of the fuselage and which will act due to the effect of a bathymetric or elevation sensor.

In the event the system of the invention is applied to any type of guided-control bullet or projectile, the course is modified with a special variation of its angular momentum, for example by means of the relative displacement of its center of gravity with respect to the center of lift by any of the devices defined in the foregoing.

Optionally when the system is applied to any type of bullet or projectile for the purpose of previously correcting the trajectory degree of error, this can be done by means of relative displacement of the center of gravity with respect to the center of lift at the manufacturing site or by any device according to the foregoing explanation.

Another example of the use of the invention consists of its application to any type of helicopter, using the angular momentum of the rotor 22 of the main propeller. The helicopter must have a dynamic system for generating momenta perpendicular to its angular momentum which allow controlling the mobile apparatus.

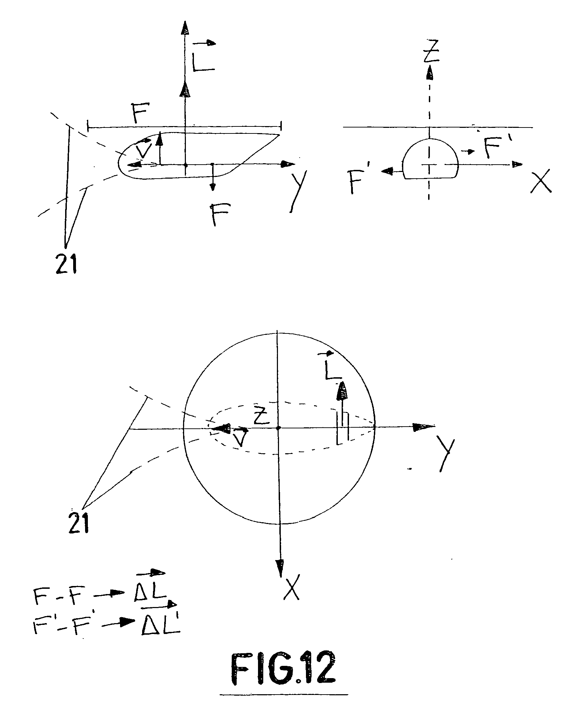

Actuation of the pairs of forces $\vec{F} - \vec{F}$ and $\vec{F}' - \vec{F}'$ of Figure 12 generates momenta which, since they act with the angular momentum of the rotor $\vec{L}$, determine a precession movement about a third axis perpendicular to the previous ones.

When forces $\vec{F} - \vec{F}$ act, a trajectory variation 21 to starboard or portside will be obtained, and when forces $\vec{F}' - \vec{F}'$ act, elevation or descent of the craft will occur according to the relative value of the torques. In all cases, the resultant interaction of the momenta of the acting torques will be coupled with the linear velocity of the rotor, generating a change in the linear trajectory of the solid $\vec{V}$, thus allowing its steering in space.

The system allows the angular momentum of the main propeller to increase, increasing the rotation mass.

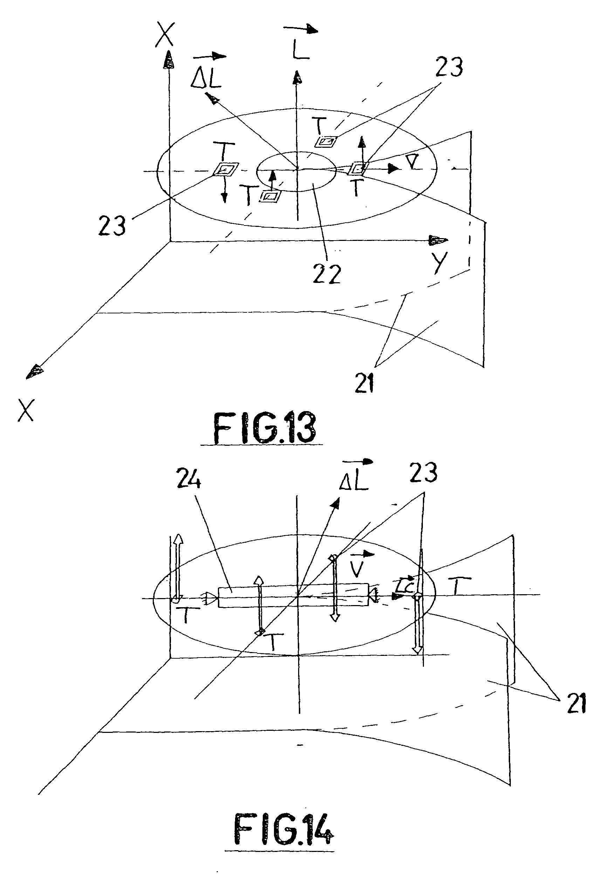

The system can additionally be applied to any type of artificial satellite provided with intrinsic angular momentum, such that its control is carried out by means of the intermittent use of nozzles or jet propulsion turbines (Figure 13). When the system is applied to an artificial satellite provided with intrinsic angular momentum and located in an orbit close to the elliptical orbit, lift thereof with no energy consumption is achieved.

According to the invention when aircraft control is performed by means of a dynamic device, such as that referred to as the dynamic turbine rudder, it allows aircraft control to be carried out outside of the field of land gravity, and that it is connected to the craft control station. This system, shown in Figure 13, is made up of different turbines 23 located on the fixed fuselage, and a central rotor 22 provided with intrinsic angular momentum $\vec{L}$ by means of constant rotation about its principal axis of inertia. The aircraft will have a velocity $\vec{V}$ by means of any conventional propulsion system.

The turbines 23 located in the fixed part of the fuselage generate angular momenta $\Delta\vec{L}$ with their temporary ignition that do not spatially coincide with the principal momentum $\vec{L}$. Under these conditions aircraft control is performed as previously discussed.

As will be understood, the use of pairs of opposite turbines allows obtaining a greater effect in the variation of angular momentum and greater efficacy in aircraft control.

The same previous effect can be obtained in the case that the entire fuselage is fixed, but it has an inner cylinder acting as a constantly rotating rotor 24 with angular momentum $\vec{L}$. This situation is represented in Figure 14 of the attached drawings.

In this case, the turbines T will be in the fixed part of the fuselage, obtaining craft control by means of variation of the angular momentum $\Delta\vec{L}$, obtained by means of any of the systems proposed throughout this description.

As will be understood, aircraft impulsion and control can be performed with propeller turbines for the case of their use in a terrestrial atmosphere or the like.

On the other hand, according to the invention the rotor 24 is able to generate new angular momenta perpendicular to the principal angular momentum by means of magnetic or electromagnetic devices, or devices of another type, acting remotely.

According to a preferred embodiment the rotor 24 consists of a liquid metal, such as liquid sodium, mercury or any other liquid metal, confined in an enclosed space, that can be actuated by electromagnetic means, or others, so that it acquires an angular momentum coinciding with a principal axis of inertia of the inertia ellipsoid of the craft, and which is simultaneously susceptible to generating new angular momenta with a component orthogonal to the principal.

The invention may also alternatively be applied to a launcher for aircrafts, rockets and space shuttles, or for any other mobile apparatus that must overcome terrestrial gravity, and generally any gravitational or attraction field, in which the primary purpose of the launcher is to give the aircraft or rocket the initial thrust to overcome this attraction field, reducing the amount of fuel to be carried. In these cases it is necessary to overcome the gravitational or attraction field inversely proportional to the square distance.

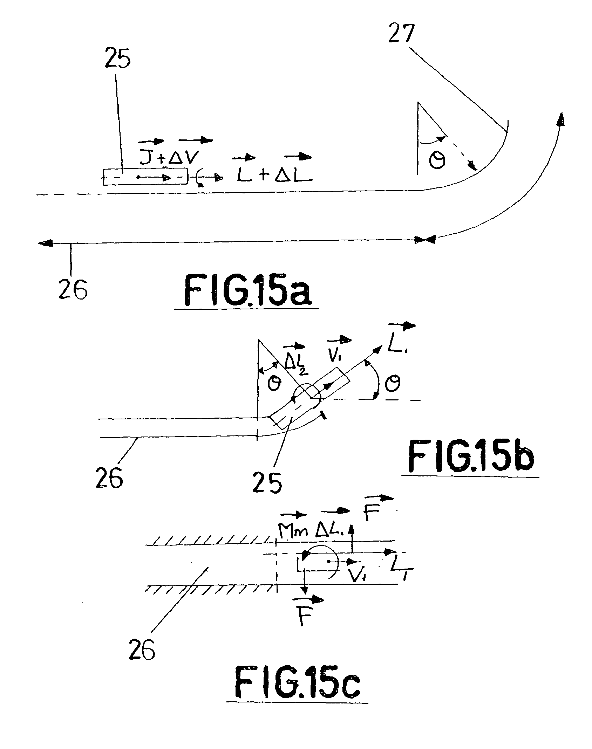

The launch mechanism will be made up of a ground-supported fixed structure and traction gear, as shown in Figure 15A. The aircraft will rise with its longitudinal axis parallel to the ground by means of an electromagnet system. The aircraft will initially be subjected to action torques generating a rotational movement about its longitudinal axis and providing it with angular momentum $\vec{L}$, which may increase throughout the takeoff area 26: $\vec{L} + \Delta\vec{L}$. When the mobile apparatus is located on the catapult or launcher, rotating and, for example, with magnetic levitation, it will be subjected to a strong initial thrust by means of the recoverable traction gear, providing it with a velocity $\vec{V}$ which may further increase throughout the gear due to acceleration of the mobile apparatus, whether due to its own means or by means of external mechanical systems, or with magnetic or electrical forces, etc..., reaching a velocity $\vec{V} + \Delta\vec{V}$.

The aircraft propelled with the initial velocity in the direction of its longitudinal axis, is subjected to a new electromagnetic or mechanical excitation, which will generate the torque $\vec{M}_{M\prime}$ in this case according to a vertical axis, perpendicular to the initial angular momentum, as can be seen in Figure 15C (plan view of the acceleration gear). This electromagnetic excitation may be reinforced by mechanical excitation by means of side turbines.

Action of the electromagnetic or mechanical momentum $\vec{M}_{M}$ will generate an increase of the angular momentum with a component orthogonal to the existing angular momentum, and will be maintained the time that is required for the craft to begin a curved trajectory 27, defining a circumferential arc as shown in Figure 15B (side view of the acceleration gear and rotation area). The angle of rotation θ can be adjusted and the moment in which the mobile apparatus is to be catapulted can be selected according to the time in which $\vec{M}_{M}$ acts. In this rotation process, the mobile apparatus 25 couples its linear velocity to the rotation imposed by the combination of the angular momentum $\vec{L} + \Delta\vec{L}$ with the acting momentum $\vec{M}_{M\prime}$ changing the trajectory from a linear to a curved trajectory.

By means of this system the mobile space apparatus will have obtained thrust due to the dynamic leverage, proportional to its rotational velocity, its moment of inertia, and the final torque received. This initial momentum will allow it to overcome gravitational attraction and be lifted, using its own motors only to maintain the initial velocity.

The system will allow significant energy savings, since it will not have to carry fuel required to overcome the gravitational field, and furthermore, if the craft maintains its intrinsic angular momentum, a further energy savings will be obtained since the intrinsic angular momentum could be used successively, benefiting from the dynamic leverage.

In addition to what has been explained and described in the foregoing, the system of the invention can be used for rocket or cylindrical craft lift, or for any other bodies. To that end the mobile apparatus is made to rotate by means of an inclined plane until it reaches an expected rotational velocity W. After this time, the rotational velocity is reduced by means of friction or with the use of any suitable device, while the other end is kept free. With this, the mobile apparatus begins to lift the end the rotation of which has not been stopped, this rotation continuing until the mobile apparatus adopts a vertical position.

The system can also be used for the dynamic lifting of solids. To that end the system has provided the arrangement of a vertical shaft which is activated with rotational movement and to which a variable number of shafts perpendicular to said rotational shaft are linked, these latter shafts also being provided with spin. The second shafts support a platform, such that they slide at the same time along the bottom part of the platform.

With this arrangement the linking of the secondary shafts allows them to be lifted due to the dynamic interaction effect, thus achieving lifting of the platform they support.

It is not necessary to prolong this description so that a person skilled in the art may understand its scope and the advantages derived therefrom, and to develop and carry out to practice the object thereof.

Nevertheless it must be understood that the invention has been described according to a preferred embodiment thereof and by means of its application to different types of mobile apparatuses, therefore it may be susceptible to modifications without this implying any alteration of the basis of said invention. Such modifications may affect the general implementation thereof as well as the shape, size and/or materials for manufacturing the different components forming it.

**Claims**

1. A dynamic system for controlling mobile apparatuses, the mobile apparatus being provided with conventional propulsion and displacement velocity, which system makes it possible to modify the mobile apparatus trajectory both in the terrestrial atmosphere and in space, or in any fluid, preferably water, **characterized in that** it comprises a dynamic device made up of a means able to provide angular momentum, and a system of spatial variation of angular momentum allowing the increase of this angular momentum $\Delta\vec{L}$ to have a component that is orthogonal to the initial angular momentum $\vec{L}$.

2. A control system according to claim 1, **characterized in that** it includes a dynamic gravity rudder device connected to the craft or mobile apparatus control center by means of which a relative variation of the center of gravity (O) of the craft with respect to the center of lift (O') thereof is caused.

3. A control system according to claim 2, **character-**

**ized in that** said system of relative variation of the center of gravity essentially consists of a group of fuel tanks and pumps (6, 7) distributed in the craft fuselage such that fuel is transferred by pumping from certain deposits (6) to others (7), generating a displacement δ of the center of gravity causing modification of the kinetic momentum of the craft, this fuel transfer action between deposits being controlled by an electronic circuit (8) responsible for converting the control commands received from the control station.

4. A control system according to claim 2, **characterized in that** the craft fuselage lacks rotation, obtaining the dynamic interaction and the dynamic leverage inside the craft by incorporating a rotor device actuated with conventional mechanisms, especially of a turbine or electric engine type, the constant angular momentum of which coincides with the principal axis of the inertia ellipsoid of the craft, and such that said rotor is fixed to the craft structure by means of a fixed suspension allowing modification of the angular momentum axis with respect to reference axes, but such that it transmits its dynamic reactions to the craft fuselage.

5. A control system according to claim 4, **characterized in that** in a preferred embodiment, the dynamic effects of the inner rotor actuate control nozzles located in the outer craft fuselage, such that the ignition of the nozzles gives rise to the generation of angular momenta not coinciding with the existing angular momentum which can be used to control the craft, to which end the inclusion of an electronic circuit responsible for detecting dynamic reactions and giving temporary ignition commands to the control nozzles has been provided.

6. A control system according to claim 4 or 5, **characterized in that** in the case of using the system in the terrestrial atmosphere or the like, craft impulse and control are performed with propeller turbines.

7. A control system according to claim 2, **characterized in that** the craft has a cylindrical fuselage configured such that it has an aerodynamic profile at the bow and such that it is propelled by turbines at the stern adopting the configuration of a rocket, control of which is performed by displacement of the center of gravity ("O") by means of transferring fuel from a deposit (9) at the bow to a deposit (10) at the stern, or vice versa, such that with the movement of the center of gravity to the bow, the craft turns starboard, and with the movement of the center of gravity to the stern the craft turns portside, further being susceptible to incorporating other side devices for the lifting or lowering action of the craft by means of a similar transfer maneuver.

8. A control system according to claim 1, **characterized in that** in its application to the case of a conventional airplane, the conventional tail rudder is replaced by a dynamic airplane rudder device (11) made up of a cylinder (12) connected to the fuselage by means of a yoke (13) and located above it, with respect to which it may swing, is centered and has its axis parallel to the longitudinal axis from bow to stern, said cylinder (12) constantly revolving at a given velocity and internally having two deposits (14, 15) half-filled with oil or another fluid, such that when the fluid is propelled from one deposit to the other with the use of a pump, disequilibrium is created giving rise to a variation of the angular momentum resulting in a portside or starboard turn as the larger amount of fluid is moved to the rear deposit or to the front deposit, respectively.

9. A control system according to claim 8, **characterized in that** in an embodiment variant, the dynamic airplane rudder is located inside the fuselage.

10. A control system according to claim 8 or 9, **characterized in that** the variation of the dynamic momentum of the dynamic airplane rudder is performed by virtue of the action of magnetic, electromagnetic or mechanical forces, or forces of any other type, acting on the rotor.

11. A control system according to claims 8 to 10, **characterized in that** the modification of the rotation direction of the rotor simultaneously with that of its center of gravity facilitates craft control.

12. A control system according to claim 1, **characterized in that** in an embodiment alternative, it allows for its installation onboard a submarine for its control with a steering system by means of dynamic interactions, in which it is provided that the submarine has a body at the bow with a dynamic design, housing the crew's cabin or room, as well as fins or stabilizing planes, and a cylindrical body at the stern with the incorporation of the thrust engine, such that the submarine drive engine, preferably an electric engine, makes the body at the bow rotate simultaneously about its longitudinal axis, submarine control being performed by displacement of the center of gravity in relation to the center of buoyancy by virtue of the modification of the resultant torque between the center of gravity and the metacenter caused by the modification of the relative position of the center of gravity due to the transfer of water or other fluid from certain deposits to others, while for the purpose of the depth control operation, the submarine will preferably have side nozzles located in the fixed part of the fuselage.

**13.** A control system according to claim 12, **characterized by** the arrangement of a rotor inside the submarine, such that control thereof is achieved by displacement of the center of gravity simultaneously modifying the rotation direction of the rotor and the position of the center of gravity.

**14.** A control system according to claim 1, **characterized in that** in an embodiment variant of the system for its application to the case of a maritime combat torpedo (16) provided with an electric engine and propeller (17), control is performed by means of the control of the center of gravity of the projectile, said torpedo being moved by an engine simultaneously supplying its displacement velocity and rotation ( $\widehat{\omega}$ ) about its longitudinal axis, giving it angular momentum ( $\vec{L}$ ), and the displacement of the center of gravity of which is performed by means of transferring water or another liquid or gas fluid from one deposit (18) to another deposit (19), both deposits being located in longitudinally separated positions, or by means of any other system of the previous claims.

**15.** A control system according to claim 14, **characterized in that** it further provides the incorporation of side nozzles in the fixed outer part of the torpedo, by means of which control of its course or its depth is performed.

**16.** A control system according to claim 14, **characterized in that** the displacement of the center of gravity (O) is performed by means of a piston (18) actuated by a servomotor (19).

**17.** A control system according to claim 14, **characterized in that** the displacement of the center of gravity (○) is performed by means of any system for displacing a moving weight (20).

**18.** A control system according to claim 14, **characterized in that** control of the torpedo (16) is performed by modifying its rotation direction simultaneously with its center of gravity, for example by means of a pusher propeller in both rotation directions or by means of a double propeller (21).

**19.** A control system according to claim 1, **characterized in that** in the case of application to an airship for transporting liquids or gases, it is configured with a cylindrical structure driven by a propeller located at its stern, simultaneously generating rotational movement of the aircraft with respect to its longitudinal axis, and control of which is performed by translation of its center of gravity, to which end it incorporates water pump and deposit equipment at the bow and stern, such that turning is performed by transferring fluid from one deposit to the other.

**20.** A control system according to claim 19, **characterized in that** control of the airship is performed by means of transferring the same liquid or fuel it is transporting without requiring additional pumps or deposits.

**21.** A control system according to claim 19 or 20, **characterized in that** the airship can be controlled by remote control, with no crew, in which case no fixed body is required.

**22.** A control system according to claim 1, **characterized in that** in its application to a rocket or projectile, modification of the elevation is obtained by means of two jet turbines located in the fixed part of the fuselage at the tail, and they are actuated by remote control intermittently and in response to the control commands received, while the horizontal course is controlled by means of the relative displacement of the center of gravity with respect to the center of lift by any of the devices defined in claims 12, 13 and 14, or also possibly by means of turbines located in the fixed part of the fuselage.

**23.** A control system according to claim 22, **characterized in that** modification of the elevation is obtained by means of a single jet turbine located in the fixed part of the fuselage at the tail, and it is actuated by remote control intermittently and in response to the loss of elevation.

**24.** A control system according to claim 22 or 23, **characterized in that** modification of the elevation is obtained by means of a single jet turbine located in the fixed part of the fuselage at the tail, and which acts due to the effect of a bathymetric or elevation sensor.

**25.** A control system according to claim 1, **characterized in that** it can be applied to any type of bullet or projectile with guided control, the course of which is modified by displacement of the center of gravity with respect to the center of lift by means of any of the devices defined in claims 12, 13 and 14.

**26.** A control system according to claim 25, **characterized in that** the system likewise provides the possibility of previously correcting the degree of error of the bullet or projectile trajectory by means of the relative displacement of the center of gravity with respect to the center of lift at the manufacturing site.

**27.** A control system according to claim 1, **characterized in that** in an alternative application to the case of a helicopter of any type, with the use of the angular momentum of the principal helicopter rotor, the helicopter must have a dynamic system for generating torques perpendicular to its angular momentum to generate momenta which, when acting on the existing angular momentum, define a precession movement about a third perpendicular axis, the portside or starboard variation in the trajectory (21) being determined according to the couple of forces acting on each occasion.

28. A control system according to claim 27, **characterized in that** the increase of the angular momentum of the main propeller of the helicopter is achieved by increasing the rotation mass.

29. A control system according to claim 1, **characterized in that** it allows being applied to the control of any type of artificial satellite provided with intrinsic angular momentum, such that control thereof is performed with the use of nozzles or jet propulsion turbines.

30. A control system according to claim 29, **characterized in that** in the case of an artificial satellite provided with intrinsic angular momentum and located in an orbit close to the elliptical orbit, the lift thereof is performed with no energy consumption.

31. A control system according to claim 1, **characterized in that** the use of the dynamic turbine rudder as a dynamic device for aircraft control allows controlling the craft outside of the terrestrial gravity field, the device being connected to the craft control station, and **in that** said dynamic rudder device comprises several turbines (23) located in the fixed craft fuselage and a central rotor (22) provided with intrinsic angular momentum by constant rotation about its principal axis of inertia.

32. A control system according to claim 31, **characterized by** the use of pairs of opposite turbines (23) to obtain a greater effect on the variation of the angular momentum and greater efficacy in craft control.

33. A control system according to claim 31 or 32, **characterized in that** this improved effect of the variation of the angular momentum which translates into greater efficacy in craft control is also achieved with the provision of a fixed fuselage inside of which a rotor (24) with a given angular momentum has been incorporated, and in which the turbines (23) are joined to the fixed part of the fuselage.

34. A control system according to claim 31, **characterized in that** craft propulsion and control are performed with propeller turbines in the case of use in the terrestrial atmosphere or in another atmosphere with similar characteristics.

35. A control system according to claim 31, **characterized in that** the rotor (24) is able to generate new angular momenta perpendicular to the principal angular momentum by means of magnetic or electromagnetic devices, or devices of another type, acting remotely.

36. A control system according to claim 31, **characterized in that** the rotor (24) preferably consists of a liquid metal, such as liquid sodium, mercury or any other liquid metal, confined in an enclosed space, susceptible to being remotely actuated with the use of electromagnetic means, or others, for the purpose of providing it with an angular momentum coinciding with a principal axis of inertia of the inertia ellipsoid of the craft, and is simultaneously susceptible to generating new angular momenta with a component orthogonal to the principal angular momentum.

37. A control system according to claim 1, **characterized by** its capability of being applied to the case of a launcher for aircrafts, rockets and space shuttles which must overcome terrestrial gravity or any other gravitational or attraction field, the launcher of which has the purpose of providing the aircraft or rocket with the initial thrust with a reduction of the amount of fuel to be carried, the launch mechanism of which includes a ground-supported fixed structure and traction gear, and such that the aircraft is made to lift with its longitudinal axis parallel to the ground, with the use of mechanical or electromagnet devices generating action torques causing rotational movement of the craft (25) and providing it with a corresponding angular momentum susceptible to being increased throughout the takeoff area (26), under which conditions a strong initial thrust is applied to the craft by means of the recoverable traction gear to provide it with a velocity that increases along the gear by virtue of acceleration of the mobile apparatus, and such that the craft (25), propelled with this initial velocity, is subjected to a new electromagnetic or mechanical excitation to generate a new momentum for a sufficient time that is perpendicular to the initial angular momentum and as a result of which the craft (25) begins the curved trajectory (27).

38. A lift system for rockets, cylindrical crafts or other bodies according to claim 1, **characterized in that** the mobile apparatus is made to rotate by means of an inclined plane until acquiring a rotational velocity (W), the rotational velocity of one end then being reduced while the other end is kept free, as a result of which the mobile apparatus begins to lift the end, the rotation of which has not been stopped, until reaching a vertical position.

39. A dynamic solid lift system according to claim 1, **characterized by** the arrangement of a rotating vertical axis to which a variable number of shafts perpendicular to said rotating shaft and activated with spin also are linked, the second shafts being arranged such that they support a platform, while at the same time sliding along the bottom part of the platform, and the linking of the secondary shafts allowing them to be lifted due to the effect of dynamic interaction, lifting with it the platform they support.

**FIG.1**

**FIG.2**

FIG.3a

FIG.3b

FIG.4

FIG5

## FIG.6

## FIG.7

FIG.8

FIG.9a

FIG.9b

**FIG.10a**

**FIG.10b**

**FIG.10c**

**FIG.11a**

**FIG.11b**

**FIG.11c**

**FIG.11d**

**FIG.11e**

FIG.12

**FIG.13**

**FIG.14**

**FIG.15a**

**FIG.15b**

**FIG.15c**

## INTERNATIONAL SEARCH REPORT

| International application No. |
| --- |
| PCT/ ES 2004/000174 |

**A. CLASSIFICATION OF SUBJECT MATTER**

**Int.Cl.7** G05D1/10, B64G1/28, B63H25/42

According to International Patent Classification (IPC) or to both national classification and IPC

**B. FIELDS SEARCHED**

Minimum documentation searched (classification system followed by classification symbols)

**Int.Cl.7** G05D, B64G, B63H

Documentation searched other than minimum documentation to the extent that such documents are included in the fields searched

Electronic data base consulted during the international search (name of data base and, where practicable, search terms used)

EPODOC, OEPMPAT, PAJ, WPI.

**C. DOCUMENTS CONSIDERED TO BE RELEVANT**

| Category* | Citation of document, with indication, where appropriate, of the relevant passages | Relevant to claim No. |
| --- | --- | --- |
| X | US 3 423 613 A (DAVIS) 21 January 1969 (21.01.1969), column 3, line 19 - column 5, line 7; figure 2. | 3 |
| X | US 5 026 008 A (LURIE et al.) 25 June 1991 (25.06.1991), column 3, line 66 - column 7, line 2; figures 1, 2. | 3 |
| X | US 2 774 305 A (FITZGERALD et al.) 18 December 1956 (18.12.1956), the whole document | 3 |
| X | US 4 504 033 A (ENGELKING) 12 March 1985 (12.03.1985), column 5, line 1 - column 9, line 55; figures 3, 4. | 3 |
| P, X | WO 03/062051 A1 (BARCELÓ) 31 July 2003 (31.07.2003), page 3, line 23 - page 4, line 29; figure 3. | 3 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| **16 July 2004 (16.07.04)** | **12 August 2004 (12.08.04)** |

| Name and mailing address of the ISA/ | Authorized officer |
| --- | --- |
| **SPTO** | |
| Facsimile No. | Telephone No. |

Form PCT/ISA/210 (second sheet) (July 1992)

# EP 1 626 319 A1

## INTERNATIONAL SEARCH REPORT

**Box I    Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

   - -

2. ☒ Claims Nos.: **1, 2, 4 and 39**
   because they relate to parts of the international application that do not comply with the prescribed requirements to such an extent that no meaningful international search can be carried out, specifically:

   **The number of claims submitted and their content do not respect the requirements for conciseness pursuant to PCT Rule 6.1(a), taking account of the nature of the invention. Moreover, these claims are not drafted clearly and concisely, contrary to the requirements of PCT Article 6, such that these claims set forth the technical results to be obtained but do not state clearly and explicitly the manner in which this is to be done.**

3. ☐ Claims Nos.:
   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest.

☐ No protest accompanied the payment of additional search fees.

Form PCT/ISA/210 (continuation of first sheet (1)) (July 1992)

INTERNATIONAL SEARCH REPORT
Information on patent family members

International Application No

PCT/ ES 2004/000174

| Patent document cited in search report | Publication date | Patent familiy member(s) | Publication date |
|---|---|---|---|
| US3423613 A | 21.01.1969 | none | ----------- |
| US5026008 A | 25.06.1991 | none | ----------- |
| US2774305 A | 18.12.1956 | none | ----------- |
| US 4504033 A | 12.03.1985 | FR 2492093 AB | 16.04.1982 |
| WO03062051 A | 31.07.2003 | none | ----------- |